# EUROPÄISCHE PATENTSCHRIFT

(11) **EP 2 443 586 B1**
(45) Veröffentlichungstag und Bekanntmachung des Hinweises auf die Patenterteilung: **26.02.2020**
(21) Anmeldenummer: 10727366.6
(22) Anmeldetag: 15.06.2010
(51) Int. Cl.: G06K 9/00

(54) **VERFAHREN UND VORRICHTUNG ZUM ERKENNEN EINER RÜCKWÄRTIGEN FAHRZEUGBELEUCHTUNG**
METHOD AND DEVICE FOR DETECTING A REAR VEHICLE LIGHT
PROCÉDÉ ET DISPOSITIF DE RECONNAISSANCE D'UN ÉCLAIRAGE ARRIÈRE D'UN VÉHICULE

(30) Priorität: 15.06.2009 DE 102009025545
(43) Veröffentlichungstag der Anmeldung: 25.04.2012
(73) Patentinhaber: HELLA GmbH & Co. KGaA, 59552 Lippstadt (DE)
(72) Erfinder: WINTER, Jan, 10997 Berlin (DE); FEIDEN, Dirk, 12623 Berlin (DE)
(74) Vertreter: Pfenning, Meinig & Partner mbB
(86) Internationale Anmeldenummer: PCT/EP2010/003776
(87) Internationale Veröffentlichungsnummer: WO 2010/145848

(56) Entgegenhaltungen:
- EP-A1- 1 024 050
- US-B1- 7 365 769
- M BETKE, H NGUYEN: "Highway Scene Analysis from a Moving Vehicle under Reduced Visibility Conditions" IEEE INTERNATIONAL CONFERENCE ON INTELLIGENT VEHICLES, 28. Oktober 1998 (1998-10-28), Seiten 1-6, XP002605235 Stuttgart, Germany
- L T Schaaser et al.: "11.5.1 Segmentation" In: I Masaki (Ed.): "Vision-Based Vehicle Guidance" 1992, Springer Verlag , New York, US , XP002605236 , Seiten 242-245 Seite 242, Zeile 15 - Seite 243, Zeile 13 Seite 244, Zeile 9 - Zeile 10; Abbildungen 11.4,11.5
- J Tantalo, F Merat: "Brake Light Detection by Image Segmentation" Department of Electrical Engineering and Computer Science 17. Dezember 2006 (2006-12-17), XP002605237 Gefunden im Internet: URL:http://www.johntantalo.com/blog/wp-con tent/uploads/2006/12/brakedetection.pdf [gefunden am 2010-10-11]
- Yen-Lin Chen ET AL: "Nighttime Vehicle Detection for Driver Assistance and Autonomous Vehicles", International Conference on Pattern Recognition, vol. 1, 1 January 2006 (2006-01-01), pages 687-690, XP055343239, US ISSN: 1051-4651, DOI: 10.1109/ICPR.2006.858

## Beschreibung

Die Erfindung betrifft ein Verfahren zum Erkennen eines Zustands einer rückwärtigen Fahrzeugbeleuchtung sowie eine zum Erkennen eingeschalteter Fahrzeugbeleuchtungen vorausfahrender Fahrzeuge geeignete Vorrichtung.

Moderne Fahrzeuge werden zunehmend mit kamerabasierten Fahrerassistenzsystemen ausgestattet, die dazu dienen, den Fahrer beim Führen des Fahrzeugs zu unterstützen. In solchen kamerabasierten Fahrerassistenzsystemen werden Bilder einer Umgebung des Fahrzeugs erfasst, um etwa Abstände zu einer Fahrbahnbegrenzung zu messen oder Verkehrsschilder zu erkennen. Anhand dieser Informationen über die Umgebung des Fahrzeugs kann ein entsprechend eingerichtetes Fahrerassistenzsystem beispielsweise den Fahrer durch eine geeignete Signalgebung vor einem ungewollten Verlassen der Fahrspur warnen oder aber auch aktiv in die Steuerung des Fahrzeugs einzugreifen, etwa durch ein Aktivieren von Bremslichtern bei Erkennen einer Situation, die eine baldige Bremsung wahrscheinlich oder notwendig erscheinen lässt. Derartige Systeme sind beispielsweise aus "Highway Scene Analysis from a Moving Vehicle under Reduced Visiblilty Conditions", M. Betke et al., IEEE International Conference on Intelligent Vehicles, 28. Oktober 1998, Seiten 1-6, XP002605235, Stuttgart, Germany, bekannt wie auch aus EP 1 024 050 A1.

Damit derartige Fahrerassistenzsysteme möglichst gut auf Verkehrssituationen reagieren können, ist es wünschenswert, wenn sie mit Informationen über rückwärtige Fahrzeugbeleuchtungen vorausfahrender Fahrzeuge versorgt werden können, wozu insbesondere als Fahrtrichtungsanzeiger oder Warnblinker verwendete Blinklichter oder Bremslichter zählen können.

Der Erfindung liegt daher die Aufgabe zugrunde, ein Verfahren vorzuschlagen, mit dem ein Aufleuchten einer rückwärtigen Fahrzeugbeleuchtung eines vorausfahrenden Fahrzeugs erkannt werden kann, das möglichst einfach realisierbar sein und mit einer Verarbeitung möglichst kleiner Datenmengen auskommen soll. Der Erfindung liegt ferner die Aufgabe zugrunde, eine Vorrichtung zum Erkennen von aufleuchtenden rückwärtigen Fahrzeugbeleuchtungen vorausfahrender Fahrzeuge zu entwickeln, die sich mit dementsprechend geringem Aufwand realisieren und ohne Verarbeitung unnötig großer Datenmengen betreiben lässt.

Diese Aufgabe wird erfindungsgemäß gelöst durch ein Verfahren mit den Merkmalen des Hauptanspruchs und durch eine Vorrichtung mit den Merkmalen des Nebenanspruchs sowie durch ein Fahrzeug, das eine solche Vorrichtung enthält. Vorteilhafte Weiterentwicklungen und Ausgestaltungen der Erfindung ergeben sich mit den Merkmalen der abhängigen Ansprüche.

Vorgeschlagen wird also ein Verfahren zum Erkennen eines Zustands einer rückwärtigen Fahrzeugbeleuchtung, bei dem ein in einem Fahrzeug integriertes Kamerasystem ein Bild einer Umgebung vor dem Fahrzeug erzeugt und eine mit dem Kamerasystem verbundene Auswerteeinheit mindestens ein in dem Bild enthaltenes Fahrzeug erkennt, einen diesem Fahrzeug zugehörigen Bildbereich des Bildes definiert und den Bildbereich in Teilbereiche einteilt, die zumindest einen linken Teilbereich und einen rechten Teilbereich umfassen, wobei mittels der Auswerteeinheit jeweils eine Segmentierung der Teilbereiche in Bildsegmente durchgeführt wird anhand von Helligkeitswerten in diesen Teilbereichen enthaltener Bildpunkte, wobei ferner aus jedem dieser Teilbereiche jeweils mindestens ein hellstes Bildsegment extrahiert wird und eine Prüfung der extrahierten Bildsegmente darauf durchgeführt wird, ob sie einer bestimmten Fahrzeugbeleuchtung in eingeschaltetem Zustand zuordenbar sind, und wobei die Auswerteeinheit ein dem so festgestellten Zustand zugeordnetes Signal ausgibt, falls diese Prüfung positiv ausgefallen ist.

Dadurch lässt sich mit verhältnismäßig geringem Aufwand eine automatische Erkennung aufleuchtender rückwärtiger Fahrzeugleuchten realisieren, wobei das in Abhängigkeit davon ausgegebene Signal eine Warnfunktion eines Fahrerassistenzsystems oder auch einen direkten Eingriff in eine Fahrzeugsteuerung auslösen kann. Unter einer Segmentierung wird dabei eine Zusammenfassung von benachbarten Bildpunkten in Bildsegmente verstanden. In einer punktweisen Segmentierung können Bildsegmente z.B. aus Bildpunkten gebildet werden, deren Helligkeitswerte sich um weniger als einen vorgegebenen Schwellwert voneinander unterscheiden.

Eine entsprechend vorteilhafte Vorrichtung zum Erkennen eines Zustands einer rückwärtigen Fahrzeugbeleuchtung zur Verwendung in einem Fahrzeug weist daher ein Kamerasystem zum Erfassen von Bildern einer Umgebung vor dem Fahrzeug und eine Auswerteeinheit auf, wobei die Auswerteeinheit eingerichtet ist
- zum Erkennen mindestens eines in den Bildern enthaltenen Fahrzeugs,
- zum Definieren eines zu diesem Fahrzeug gehörigen Bildbereichs sowie
- zum Einteilen dieses Bildbereichs in Teilbereiche, die zumindest einen linken Teilbereich und einen rechten Teilbereich umfassen,
- zum Durchführen einer Segmentierung der Teilbereiche in Bildsegmente anhand von Helligkeitswerten in diesen Teilbereichen enthaltener Bildpunkte,
- zum Extrahieren jeweils mindestens eines hellsten Bildsegments aus jedem dieser Teilbereiche,
- zum Durchführen einer Prüfung der extrahierten Bildsegmente darauf, ob sie einer bestimmten Fahrzeugbeleuchtung in eingeschaltetem Zustand zuordenbar sind, und
- zum Erzeugen eines dem so festgestellten Zustand zugeordneten Signals, falls diese Prüfung positiv ausfällt.

Das Verfahren kann z.B. so ausgeführt werden, dass es einen eingeschalteten Fahrtrichtungsanzeiger und/oder eine eingeschaltete Warnblinkanlage zu erkennen erlaubt. Dann wird für die Prüfung der extrahierten Bildsegmente ein zeitlicher Verlauf der Helligkeitswerte in den aus dem linken Teilbereich und dem rechten Teilbereich extrahierten Bildsegmenten detektiert und auf zeitliche Periodizität untersucht wird, wobei das Signal, das jetzt auf einen eingeschalteten Fahrtrichtungsanzeiger oder eine eingeschaltete Warnblinkanlage eines vorausfahrenden Fahrzeugs hindeutet, ausgegeben wird, wenn dabei eine Periodizität mit einer Frequenz innerhalb eines vorgegebenen Frequenzbereichs festgestellt wird. Der vorgegebene Frequenzbereich kann dabei z.B. als dem Intervall von 1 Hz bis 2 Hz entsprechend oder als dieses Intervall enthaltender Bereich definiert sein.

Um eine eingeschaltete Warnblinkanlage erkennen oder von einer einfachen Fahrtrichtungsanzeige unterscheiden zu können, kann es dabei vorgesehen sein, dass bei der Prüfung der Bildsegmente im Fall der Feststellung einer Periodizität der Helligkeitswerte innerhalb des vorgegebenen Frequenzbereichs ferner geprüft wird, ob die Periodizität für das extrahierte Bildsegment aus dem linken Teilbereich und das extrahierte Bildsegment aus dem rechten Teilbereich gleich und synchron ist, wobei das Signal als auf eine eingeschaltete Warnblinkanlage hindeutendes Signal ausgegeben wird, wenn diese Prüfung positiv ausfällt. Die Zuverlässigkeit kann dabei erhöht werden, wenn bei der Prüfung ferner geprüft wird, ob das extrahierte Bildsegment aus dem linken Teilbereich und das extrahierte Bildsegment aus dem rechten Teilbereich von gleicher Größe sind und auf einer gleichen Höhe liegen.

In einer besonders vorteilhaften Ausführung erlaubt das Verfahren, ein Aufleuchten eines Bremslichtsystems zu erkennen. Dann wird der Bildbereich durch die Auswerteeinheit vorzugsweise in den linken Teilbereich, den rechten Teilbereich und einen mittleren Teilbereich eingeteilt, wobei die aus den Teilbereichen extrahierten Bildsegmente bei der genannten Prüfung jeweils darauf geprüft werden, ob das extrahierte Bildsegment aus dem linken Teilbereich und das extrahierte Bildsegment aus dem rechten Teilbereich von gleicher Größe sind und auf einer gleichen Höhe liegen und ob das hellstes Bildsegment aus dem mittleren Teilbereich sich höher und mittig zwischen den hellsten Bildsegmenten aus dem linken und dem rechten Teilbereich befindet, wobei das Signal als Bremslichtsignal ausgegeben wird, wenn diese Prüfung positiv ausfällt.

In dieser Ausführung ist eine Speicherung zuvor aufgenommener Bilder nicht notwendig, da das aufleuchtende Bremslichtsystem auch ohne Verfolgung eines zeitlichen Verlaufs von Helligkeitswerten erkannt werden kann. Die zu verarbeitende und insbesondere zwischenzuspeichernde Datenmenge bei der Erkennung von Bremslichtsystemen kann also klein gehalten werden, indem auf die Erzeugung von Differenzbildern verzichtet wird und aufgenommene Bilder einzeln ausgewertet werden.

Eine besonders geringe Datenmenge wird daher erzeugt bei dem vorgeschlagenen Verfahren zum Erkennen von Bremslichtsystemen, bei dem ein in einem Fahrzeug integriertes Kamerasystem ein Bild einer Umgebung vor dem Fahrzeug erzeugt und eine mit dem Kamerasystem verbundene Auswerteeinheit mindestens ein in dem Bild enthaltenes Fahrzeug erkennt, einen diesem Fahrzeug zugehörigen Bildbereich des Bildes definiert und den Bildbereich in einen linken Teilbereich, einen mittleren Teilbereich und einen rechten Teilbereich einteilt,
- wobei mittels der Auswerteeinheit eine Segmentierung des linken, des mittleren und des rechten Teilbereichs in Bildsegmente durchgeführt wird anhand von Helligkeitswerten in diesen Teilbereichen enthaltener Bildpunkte,
- wobei aus jedem dieser Teilbereiche jeweils mindestens ein hellstes Bildsegment extrahiert wird,
- wobei - falls mehr als ein hellstes Bildsegment aus einem Teilbereich extrahiert wird, vorzugsweise paarweise jeweils für jedes der extrahierten hellsten Bildsegmente - eine Prüfung durchgeführt wird, ob das extrahierte Bildsegment aus dem linken Teilbereich und das extrahierte Bildsegment aus dem rechten Teilbereich von einer gleichen Größe sind und auf einer gleichen Höhe liegen und ob das hellste Bildsegment aus dem mittleren Teilbereich sich höher und mittig zwischen den hellsten Bildsegmenten aus dem linken und dem rechten Teilbereich befindet,
- und ein Bremslichtsignal erzeugt wird, falls diese Prüfung positiv ausfällt.

Zur Durchführung dieses Verfahrens wird eine entsprechende Vorrichtung zum Erkennen von Bremslichtsystemen zur Verwendung in einem Fahrzeug vorgeschlagen, wobei die Vorrichtung ein Kamerasystem zum Erfassen von Bildern einer Umgebung vor dem Fahrzeug und eine Auswerteeinheit aufweist und wobei die Auswerteeinheit zum Erkennen mindestens eines in den Bildern enthaltenen Fahrzeugs, zum Definieren eines zu diesem Fahrzeug gehörigen Bildbereichs sowie zum Einteilen dieses Bildbereichs in einen linken Teilbereich, einen mittleren Teilbereich und einen rechten Teilbereich eingerichtet ist, wobei die Auswerteeinheit außerdem eingerichtet ist
- zum Durchführen einer Segmentierung des linken, des mittleren und des rechten Teilbereichs in Bildsegmente anhand von Helligkeitswerten in diesen Teilbereichen enthaltener Bildpunkte,
- zum Extrahieren jeweils mindestens eines hellsten Bildsegments aus jedem dieser Teilbereiche,
- für eine - ggf. wieder paarweise für alle der extrahierten hellsten Bildsegmente durchzuführende - Prüfung, ob das extrahiertes Bildsegment aus dem linken Teilbereich und das extrahierte Bildsegment aus dem rechten Teilbereich von einer gleichen Größe sind und auf einer gleichen Höhe liegen und ob das hellste Bildsegment aus dem mittleren Teilbereich sich höher und mittig zwischen den hellsten Bildsegmenten aus dem linken und dem rechten Teilbereich befindet,
- und zum Erzeugen eines Bremslichtsignals, falls diese Prüfung positiv ausgefallen ist.

Außerdem wird ein Fahrzeug vorgeschlagen, welches mit einer erfindungsgemäßen Vorrichtung ausgestattet ist, wobei das Kamerasystem zweckmäßigerweise auf eine Umgebung vor dem Fahrzeug gerichtet ist.

In dem möglichen Fall, dass das im Bild erkannte Fahrzeug - z.B. wegen einer Fahrbahn mit in ihrem Verlauf sich ändernder seitlicher Neigung - gegenüber dem mit der Vorrichtung ausgestatteten Fahrzeug um eine Längsachse gekippt ist, sollte die erwähnte Prüfung zweier aus dem rechten und dem linken Teilbereich extrahierter Bildsegmente darauf, ob sie auf gleicher Höhe liegen, vorzugsweise mit Bezug auf eine durch das im bild erkannte Fahrzeug definierte Ebene durchgeführt werden. Die Höhe sollte also mit Bezug auf eine - im Bild auf eine mehr oder weniger horizontale Linie abgebildete - Ebene definiert sein, bezüglich derer das im Bild erkannte Fahrzeug nicht gekippt ist.

Eine besonders zuverlässige Erkennung von Bremslichtsystemen wird erreicht, wenn die Segmentierung des linken, des mittleren und des rechten Teilbereichs in Bildsegmente kantenweise durchgeführt wird. Sie kann aber genauso gut auch punktweise durchgeführt werden. Besonders vorteilhaft ist es, wenn die Segmentierung zeilenweise - oder analog spaltenweise - erfolgt, indem also zunächst in jedem dieser Teilbereiche Zeilen (bzw. Spalten) von in diesen Teilbereichen enthaltenen Bildpunkten definiert und die Zeilen (oder Spalten) dann anhand von Helligkeitswerten dieser Bildpunkte in Zeilensegmente (Spaltensegmente) zerlegt werden, wobei die Bildsegmente durch Zusammenfassen von Zeilensegmenten (Spaltensegmenten) mit benachbarten Bildpunkten erzeugt werden. Dabei erfolgt die Segmentierung der Zeilen vorteilhafterweise in jeder Zeile kantenweise, kann prinzipiell aber auch punktweise erfolgen. Als kantenweise sei dabei eine Segmentierung bezeichnet, bei der Bildkanten detektiert und Bildsegmente als Gebiete innerhalb geschlossener Kantenzüge definiert werden. Grenzen zwischen den Bildsegmenten werden dann also dort definiert, wo Helligkeitskanten detektiert werden, wobei eine Helligkeitskante definiert sein kann als Ort, an dem ein Helligkeitssprung oder eine Helligkeitsänderung einer definierten Mindestgröße mit einem Mindestgradienten oder innerhalb eines Ortsintervalls begrenzter Ausdehnung auftritt.

Die Auswerteeinheit der hier vorgeschlagenen Vorrichtung kann eingerichtet sein zum Definieren von Zeilen innerhalb der Teilbereiche, wobei die Zeilen aus den Bildpunkten dieser Teilbereiche bestehen, zum Zerlegen dieser Zeilen in Zeilensegmente anhand der Helligkeitswerten der Bildpunkte dieser Zeilen und zum Erzeugen der Bildsegmente durch Zusammenfassen von einander berührenden Zeilensegmenten aus benachbarten Zeilen.

Bei einer einfachen Ausführung des Verfahrens kann es genügen, wenn in allen drei Teilbereichen jeweils genau ein hellstes Bildsegment, also das tatsächlich hellste Bildsegment extrahiert und in beschriebener Weise darauf geprüft wird, ob es zusammen mit den hellsten Bildbereichen aus den anderen Teilbereichen ein eingeschaltetes Ensemble dreier Bremslichter sein kann. Denkbar ist es aber auch, nur im mittleren Teilsegment genau ein hellstes Bildsegment, im linken und im rechten Teilbereich jedoch jeweils die zwei oder drei hellsten Bildsegmente - also das hellste und das zweithellste oder das hellste, das zweithellste und das dritthellste Bildsegment - zu extrahieren. Wenn dann die beschriebene Prüfung paarweise für alle extrahierten Bildsegmente aus dem rechten und dem linken Teilbereich durchgeführt wird, kann das Verfahren auch dann zuverlässig das Aufleuchten eines Bremslichtsystems mit drei Bremslichtern erkennen, wenn eines der Bremslichter an Helligkeit beispielsweise von einer ebenfalls eingeschalteten Nebelrückleuchte und/oder einem Blinklicht übertroffen werden sollte.

Bei dem zum Erzeugen des Bilds verwendeten Kamerasystem kann es sich um einen in weiten Grenzen beliebig ausgeführten optischen Bildsensor oder ein einen solchen Bildsensor umfassendes System handeln. Im Hinblick auf die Verarbeitung einer möglichst kleinen Datenmenge ist dabei die Verwendung einer Graustufenkamera, also eines Graustufenbildsensors, von Vorteil. Um die Erkennung eines im Bild enthaltenen Fahrzeugs hinsichtlich ihrer Zuverlässigkeit zu verbessern, können in der Auswerteeinheit zusätzlich auch Bilddaten eines mit der Auswerteeinheit verbundenen Lidarsensors verarbeitet werden, insbesondere um ein Fahrzeug - oder ein hypothetisches Fahrzeug - zu erkennen und dadurch den Bildbereich zu definieren zu helfen, in dem das vorausfahrende Fahrzeug vermutet werden kann und der dann in beschriebener Weise in die drei Teilbereiche eingeteilt wird. Zusätzlich oder alternativ können dazu auch Messdaten eines Radarsystems verwendet werden. Die Auswerteeinheit kann also mit einem Lidarsensor und/oder einem Radarsensor verbunden sein und zum Erkennen von mindestens einem in dem Bild enthaltenen Fahrzeug mit Hilfe von Bilddaten des Lidarsensors und/oder des Radarsensors eingerichtet sein.

In einer vorteilhaften Weiterentwicklung des Verfahrens wird das Signal zu einem Ansteuern eines steuerbaren Geräts verwendet. Insbesondere kann das Bremslichtsignal zu einem Ansteuern eines steuerbaren Geräts verwendet werden, etwa eines Bremslichtsystems oder eines anderen Fahrzeugsystems. So ist es beispielsweise möglich, dass die hier vorgeschlagene Vorrichtung mit mindestens einem Gerät verbunden ist, welches über das Bremslichtsignal steuerbar ist.

Ein Ausführungsbeispiel der Erfindung wird nachfolgend anhand der Figuren 1 bis 3 erläutert. Es zeigt
- Fig. 1: eine schematische Darstellung eines Fahrzeugs, welches mit einer Vorrichtung beschriebener Art ausgestattet ist,
- Fig. 2: eine schematische Darstellung einer Einteilung eines mit der Vorrichtung erzeugten Kamerabildes in Suchbereiche,
- Fig. 3: ein Flussdiagramm, dass den Ablauf eines mit dieser Vorrichtung durchgeführten Verfahrens zum Erkennen eines Bremslichtsystems veranschaulicht und
- Fig. 4: in einer der Figur 3 entsprechenden Darstellung ein anderes mit der beschriebenen Vorrichtung durchführbares Verfahren, mit dem ein eingeschalteter Fahrtrichtungsanzeiger und eine eingeschaltete Warnblinkanlage eines vorausfahrenden Fahrzeugs erkannt werden kann.

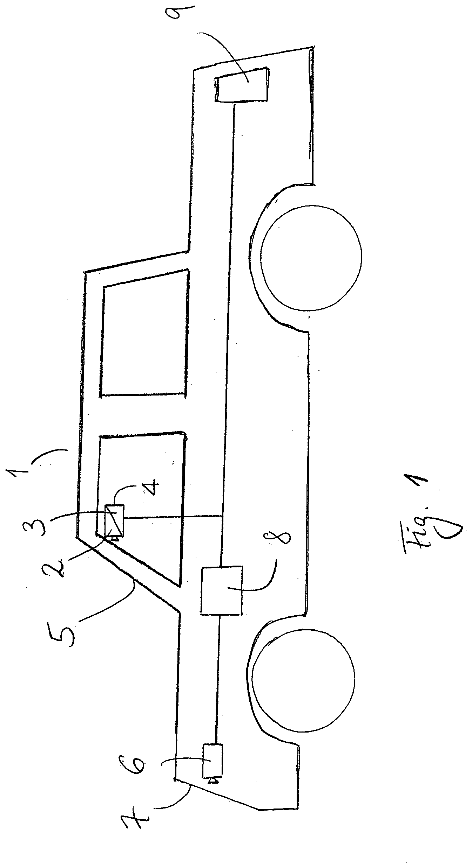

In Fig. 1 ist ein Fahrzeug 1 dargestellt, welches mit einer Vorrichtung zum Erkennen von aufleuchtenden Bremslichtsystemen vorausfahrender Fahrzeuge ausgestattet ist. Diese Vorrichtung beinhaltet ein Kamerasystem, das eine Graustufenkamera 2 und einen Lidarsensor 3 umfasst, welche beide in einer integrierten Bilderfassungseinheit 4 hinter einer Frontscheibe 5 des Fahrzeugs 1 angeordnet sind zum Erfassen einer Umgebung vor dem Fahrzeug 1. Des Weiteren umfasst die Vorrichtung einen Radarsensor 6, der hinter einem Kühlergrill 7 des Fahrzeugs 1 angeordnet ist. Ferner beinhaltet die Vorrichtung eine Auswerteeinheit 8, mit der die Bestandteile des Kamerasystems und dem Radarsensor 6 verbunden sind zur Übertragung von Bilddaten, die durch die Graustufenkamera 2 erzeugt werden, und von Ausgangssignalen des Radarsensors 6 und des Lidarsensors 3. Ferner ist die Auswerteeinheit 8 mit Bremslichtern 9 des Fahrzeugs 1 verbunden, die bei dem vorliegenden Ausführungsbeispiel nicht nur durch Treten eines Bremspedal des Fahrzeugs 1, sondern auch mittels der Auswerteeinheit 8 angesteuert werden können, um ein Bremslicht eines vorausfahrenden Fahrzeugs nach hinten "durchzureichen". Die Bremslichter 9 dienen hier nur als Beispiel für ein Fahrzeugsystem, dass in Abhängigkeit von einer Erkennung aufleuchtender Bremslichter vor dem Fahrzeug 1 angesteuert werden kann.

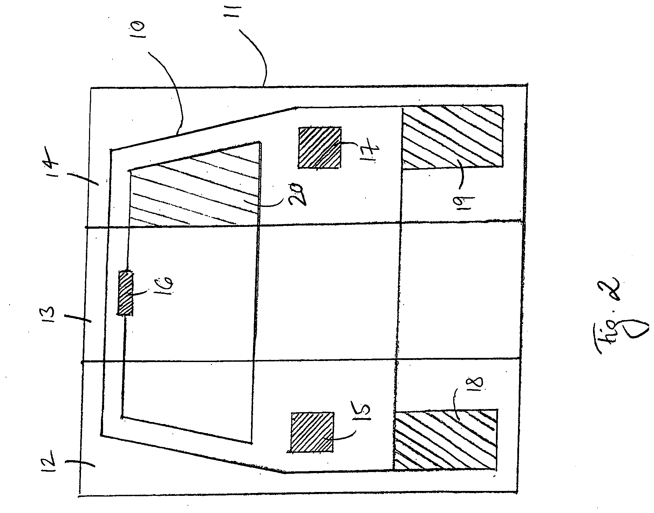

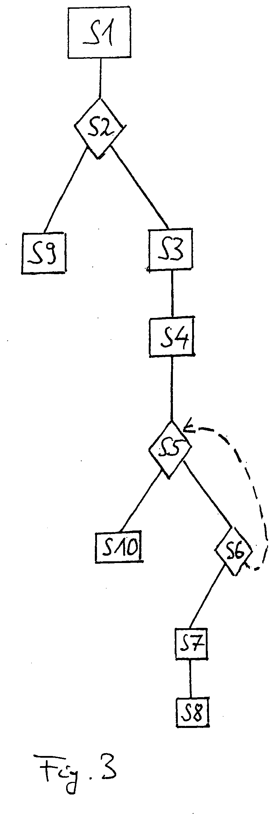

Die Funktionalität der Auswerteeinrichtung 5 wird im Einzelnen anhand der Fign. 2 und 3 beschrieben. Die Auswerteeinheit 8 ist eingerichtet zur Erzeugung und zum Ausgeben eines Bremslichtsignals, falls ein aufleuchtendes Bremslichtsystem eines dem Fahrzeug 1 vorausfahrenden weiteren Fahrzeugs erkennbar ist. Dieses Bremslichtsignal ist bei dem vorliegenden speziellen Ausführungsbeispiel an ein Bremslichtsystem des Fahrzeugs 1 übertragbar zur Aktivierung der Bremslichter 9. Das Bremslichtsignal ist jedoch wie gesagt auch zur Ansteuerung anderer oder zusätzlicher steuerbarer Geräte verwendbar. Der Lidarsensor 4 und der Radarsensor 6 sind eingerichtet zur Erzeugung von Bilddaten der Umgebung vor dem Fahrzeug 1, welche insbesondere einer Erkennung von in dieser Umgebung vorhandenen Fahrzeugen dienen.

Die Graustufenkamera 2 kann prinzipiell auch durch eine Farbkamera ersetzt werden, hat aber gegenüber dieser den Vorteil, dass sie pro Bild eine geringere Datenmenge als eine Farbkamera benötigt bzw. erzeugt bei gleicher oder sogar besserer Ortsauflösung. Die Graustufenkamera 2, der Lidarsensor 3 und der Radarsensor 6 können selbstverständlich auch in einer voneinander getrennten Bauweise realisiert oder beliebig in Bilderfassungseinheiten miteinander kombiniert werden. Auch ist ihre Anordnung innerhalb des Fahrzeugs beliebig, solange gewährleistet ist, dass Bilder bzw. Bilddaten von einer Umgebung vor dem Fahrzeug 1 erfasst werden können.

In Fig. 2 ist ein Bild einer Umgebung vor dem Fahrzeug 1 schematisch dargestellt, in dem ein dem Fahrzeug 1 vorausfahrendes weiteres Fahrzeug 10 enthalten ist. Dieses Bild veranschaulicht die Funktionsweise einer anhand Fig. 1 beschriebenen Vorrichtung zum Erkennen von Bremslichtsystemen. Das Bild ist von einer Graustufenkamera 2 dieser Vorrichtung erfasst worden und an eine in der Vorrichtung enthaltenen Auswerteeinheit 8 übertragen worden.

Diese Auswerteeinheit 8 ist eingerichtet zum Erkennen mindestens eines in den Bildern enthaltenen Fahrzeugs 10, zum Definieren eines zu diesem Fahrzeug 10 gehörigen Bildbereichs 11 sowie zum Einteilen dieses Bildbereichs in einen linken Teilbereich 12, einen mittleren Teilbereich 13 und einen rechten Teilbereich 14, wobei die Auswerteeinheit 8 außerdem eingerichtet ist zum Erzeugen einer Segmentierung des linken 12, des mittleren 13 und des rechten Teilbereichs 14 in - nachfolgend auch nur als Segmente bezeichnete - Bildsegmente anhand von Helligkeitswerten in diesen Teilbereichen enthaltener Bildpunkte. Einige dieser Segmente sind durch die in Fig. 2 dargestellten Flächen 15 bis 20 dargestellt, wobei 15 einem linken Rücklicht, 16 einem mittleren Rücklicht, 17 einem rechten Rücklicht, 18 und 19 jeweils einem Hinterrad und 20 einem im rechten Teilbereich 14 enthaltenen Teil einer Heckscheibe entspricht. Die einzelnen Segmente zeichnen sich aufgrund ihrer Definition anhand von Helligkeitswerten - also anhand von Graustufen des jeweils mit der Graustufenkamera 2 erzeugten Bildes - dadurch aus, dass innerhalb jedes dieser Segmente ein weitgehend - also nicht notwendigerweise exakt - konstanter Helligkeits- oder Graustufenwert vorliegt, während sich dieser Helligkeits- oder Graustufenwert von einem Helligkeits- oder Graustufenwert einer unmittelbaren Umgebung des jeweiligen Segments signifikant unterscheidet. Zur Segmentierung kann dabei durch eine entsprechende Programmierung der Auswerteeinheit 8 auf bereits weiter oben skizzierte Methoden zurückgegriffen werden.

Ferner ist die Auswerteeinheit 8 eingerichtet zum Extrahieren jeweils zumindest des hellsten Bildsegments - eventuell auch jeweils der beiden hellsten Bildsegmente oder der drei hellsten Bildsegmente - aus jedem dieser Teilbereiche 12, 13, und 14, welche in dem in Fig. 2 dargestellten Fall im linken Teilbereich 12 dem linken Rücklicht 15, im mittleren Teilbereich 13 dem mittleren Rücklicht 16 und im rechten Teilbereich 14 dem rechten Rücklicht 17 entsprechen. Außerdem ist die Auswerteeinheit 8 eingerichtet zum Durchführen einer Prüfung, ob das aus dem linken Teilbereich 12 extrahierte Bildsegment und das aus dem rechten Teilbereich 14 extrahierte Bildsegment von einer gleichen Größe sind und auf einer gleichen Höhe liegen und, wenn das der Fall ist, ob das aus dem mittleren Teilbereich 13 extrahierte hellste Bildsegment sich oberhalb der beiden aus den Teilbereichen 12 und 14 extrahierten Segmente und bezüglich einer horizontalen Koordinate mittig zwischen den hellsten Segmenten aus dem linken und dem rechten Teilbereich 12 und 14 befindet. Dies ist in der in Fig. 2 dargestellten Situation offensichtlich der Fall.

Schließlich ist die Auswerteeinheit 8 eingerichtet zum Erzeugen und Ausgeben eines Bremslichtsignals, falls diese Prüfung, wie in dem hier dargestellten Fall, positiv ausgefallen ist. Im vorliegenden Ausführungsbeispiel werden die Bremslichter 9 durch dieses Bremslichtsignal angesteuert.

Für eine besonders effektive Segmentierung der Teilbereiche 12, 13 und 14 ist die Auswerteeinheit 8 eingerichtet zum Definieren von Zeilen innerhalb der Teilbereiche, wobei die Zeilen aus den Bildpunkten dieser Teilbereiche bestehen, zum Zerlegen dieser Zeilen in Zeilensegmente anhand der Helligkeitswerten der Bildpunkte dieser Zeilen, wobei die Bildsegmente durch Zusammenfassen von Zeilensegmenten mit benachbarten Bildpunkten erzeugt werden. Im vorliegenden Fall verlaufen diese Zeilen horizontal von einem linken Rand bis zu einem rechten Rand des jeweiligen Teilbereichs 12, 13 oder 14. Ferner verlaufen diese Zeilen zueinander parallel und auch parallel zu einem oberen und einem unteren Rand der Teilbereiche 12, 13 oder 14. Die Definition der Zeilen kann aber genauso gut anders erfolgen, etwa parallel zu seitlichen Rändern der jeweiligen Teilbereiche 12, 13, 14.

Die Auswerteeinheit 8 ist vorteilhafterweise auch mit dem Lidarsensor 4 und dem Radarsensor 6 verbunden und eingerichtet zum Erkennen von einem in dem Bild enthaltenen Fahrzeug 10 mit Hilfe von Bilddaten bzw. Ausgangssignalen des Lidarsensors 4 und/oder des Radarsensors 6. Auf diese Weise ist eine besonders zuverlässige Detektierung vorausfahrender Fahrzeuge gewährleistet.

In Fig. 3 ist das mit der beschriebenen Vorrichtung mittels der entsprechend programmierten Auswerteeinheit 4 durchgeführte Verfahren als Flussdiagramm dargestellt.

In ein einem ersten Schritt S1 wird zunächst mit dem Kamerasystem ein Bild einer Umgebung vor dem Fahrzeug 1 erzeugt und an die mit dem Kamerasystem verbundenen Auswerteeinheit 8 übertragen. Dabei stammen die Bilddaten aus der Graustufenkamera 2, dem Lidarsensor 3 und dem Radarsensor 6. In der Auswerteeinheit 8 wird in Schritt S2 mittels bekannter Bilderkennungsverfahren das Bild nach Fahrzeugen durchsucht. Falls ein in dem Bild enthaltenes Fahrzeug erkannt worden ist, wird in Schritt S3 ein diesem Fahrzeug zugehöriger Bildbereich des Bildes definiert - entsprechend dem Bildbereich 11 in der in Fig. 2 gezeigten Situation - und der Bildbereich in den linken Teilbereich 12, den mittleren Teilbereich 13 und den rechten Teilbereich 14 eingeteilt und eine Segmentierung des linken, des mittleren und des rechten Teilbereichs 12, 13 bzw. 14 in Bildsegmente durchgeführt anhand von Helligkeitswerten in diesen Teilbereichen 12, 13, bzw. 14 enthaltener Bildpunkte.

Dabei wird die Segmentierung des linken, des mittlere und des rechte Teilbereichs 12, 13, und 14 in Bildsegmente durchgeführt, indem in jedem dieser Teilbereiche 12, 13, und 14 Zeilen von in diesen Teilbereichen 12, 13, 14 enthaltenen Bildpunkten definiert und die Zeilen anhand von Helligkeitswerten dieser Bildpunkte in Zeilensegmente zerlegt werden, wobei die Bildsegmente durch Zusammenfassen von Zeilensegmenten aus verschiedenen Zeilen, die unmittelbar benachbarte Bildpunkte enthalten, erzeugt werden.

In einem anschließenden Schritt S4 wird aus jedem dieser Teilbereiche 12, 13 und 14 jeweils das hellste Bildsegment - oder zumindest in den Teilbereichen 12 und 14 auch jeweils die beiden hellsten Bildsegmente - extrahiert. In der in Fig. 2 gezeigten Situation sind das insbesondere die Flächen 15, 16, und 17. Dabei wird ein Bildsegment dann extrahiert, wenn seine Helligkeit oberhalb eines vorgegebenen Grenzwerts - und eventuell zusätzlich eine Größe des Bildsegments über einem Schwellwert - liegt. In Schritt S5 wird - ggf. paarweise für alle extrahierten Bildsegmente aus den Teilbereichen 12 und 14 - geprüft, ob ein extrahiertes Bildsegment des linken Teilbereichs 12 und ein extrahiertes Bildsegment des rechten Teilbereichs 14 von einer gleichen Größe und auf einer gleichen Höhe sind. Dabei werden zwei Größen bzw. zwei Höhen als gleich behandelt, wenn sie sich um Werte unterscheiden, die kleiner als vorgegebene Grenzwerte sind. Fällt diese Prüfung positiv aus, wird also ein Paar von Bildsegmenten gefunden, deren Größen und Höhen in diesem Sinne gleich sind, wird in Schritt S6 geprüft, ob ein extrahiertes hellstes Bildsegment des mittleren Teilbereichs 13 existiert, welches sich erhöht mittig zwischen den Bildsegmenten des genannten Paares befindet. Dabei wird eine Abweichung von einer exakten Mittigkeit wiederum mit einem entsprechenden vorgegebenen Grenzwert verglichen. Falls die Prüfung in S6 negativ ausfällt, wird Schritt S5 ggf. für andere Paare extrahierter Bildsegmente wiederholt.

Falls die Prüfung in S6 positiv ausfällt, wird in einem weiteren Schritt S7 das schon genannte Bremslichtsignal erzeugt. Dieses Bremslichtsignal kann dadurch gegeben sein, dass einer in einer Programmierung der Auswerteeinheit 8 definierten Variablen ein bestimmter Wert zugewiesen wird. Dadurch wiederum kann eine gewünschte Funktion eines Fahrzeugsystems ausgelöst werden, beispielsweise ein Aufleuchten der Bremslichter 9 des Fahrzeugs 1 und eventuell auch weitere steuerbare Geräte des Fahrzeugs 1. Die Auslösung dieser Funktion durch das in Schritt S7 erzeugte Bremslichtsignal ist in Fig. 3 als Schritt S8 veranschaulicht.

Ergibt einer der Schritte S2 oder S5 ein negatives Ergebnis, bedeutet dies, dass entweder kein Fahrzeug (Schritt S9) oder keine Bremslichtsystem (Schritt S10) erkannt werden konnte. In diesem Fall wird das Verfahren beginnend bei Schritt 1 wiederholt.

Durch eine entsprechende Programmierung erlaubt die Auswerteeinheit außerdem die Durchführung eines ähnlichen Verfahrens, mit dem festgestellt werden kann, ob ein Fahrtrichtungsanzeiger und/oder eine Warnblinkanlage eines vorausfahrenden Fahrzeugs eingeschaltet ist.

Auch bei diesem Verfahren werden, basierend auf einer Objektdetektion Hypothesen über mögliche Kraftfahrzeuge in den von der Graustufenkamera 2 gelieferten Bildern erstellt. Diese Kraftfahrzeughypothesen enthaltende Teilbilder werden in einem weiteren Verarbeitungsschritt an eine Fahrtrichtungsanzeiger-Detektion geliefert. Diese teilt das Bild wiederum in Teilbereiche 12, 13 und 14 ein, wobei der linke Teilbereich 12 und der rechte Teilbereich 14 als Suchbereiche dienen. Innerhalb dieser Suchbereiche werden charakteristische (grauwertbasierte, kantenbasierte, eventuell auch farbbasierte) Merkmale zeitlich gespeichert. Ein Mustererkennungsalgorithmus kann nun in diesen zeitliche gespeicherten Merkmalen das Vorhandensein einer charakteristischen Frequenz für Fahrtrichtungsanzeiger (1,5 Hz ± 0,5 Hz) erkennen und als Information ausgeben. Dadurch kann zunächst z.B. der beabsichtigte Spurwechsel eines vorausfahrenden Kraftfahrzeugs automatisch erkannt werden. Zusätzlich lässt sich auch erkennen, ob das Kraftfahrzeug den Warnblinker aktiviert hat, nämlich genau dann, wenn beide Fahrtrichtungsanzeiger aktiv sind und in gleicher Phase blinken.

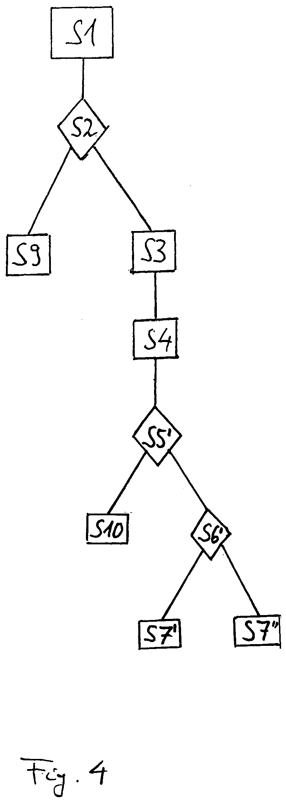

Die Fig. 4 veranschaulicht dieses Verfahren in einer der Fig. 3 entsprechenden Weise. Die Schritte S1, S2, S3, S4 und S9 und S10 entsprechen den in gleicher Weise bezeichneten Schritten des zuvor beschriebenen Verfahrens. In dem hier auf Schritt S4 folgenden Schritt S5' werden zeitliche Verläufe der Helligkeitswerte der extrahierten Bildsegmente detektiert und darauf geprüft, ob sie eine zeitliche Periodizität einer Frequenz von zwischen 1 Hz und 2 Hz zeigen. Wenn das nicht der Fall ist, wird durch Schritt S10 ein neuer Beginn des Verfahrens ausgelöst. Wenn dagegen eine derartige Periodizität festgestellt wird, wird ein weiterer Prüfungsschritt S6' ausgelöst, in dem geprüft wird, ob die Periodizität für das extrahierte Bildsegment aus dem linken Teilbereich 12 und das extrahierte Bildsegment aus dem rechten Teilbereich 14 gleich ist und ob die zeitlichen Verläufe der Helligkeitswerte dieser Bildsegmente synchronisiert sind. Wenn das nicht der Fall ist, wird mit Schritt S7' ein Fahrtrichtungsanzeigesignal ausgelöst, das ein Fahrerassistenzsystem des Fahrzeugs 1 über einen zu erwartenden Fahrtrichtungs- oder Spurwechsel des vorausfahrenden Fahrzeugs informiert. Fällt dagegen auch die mit dem Prüfungsschritt S6' durchgeführte Prüfung positiv aus, wird mit einem Schritt S7" ein Warnblinksignal ausgelöst, mit dem das Fahrerassistenzsystem des Fahrzeugs 1 die Information erhält, dass eine Warnblinkanlage das vorausfahrende Fahrzeug angeschaltet ist. Infolge dessen kann z.B. ein akustisches Warnsignal für den Fahrer des Fahrzeugs 1 ausgelöst oder eine Warnblinkanlage des Fahrzeugs 1 automatisch eingeschaltet werden. Um das Verfahren zuverlässiger zu machen, kann es vorgesehen sein, dass im Prüfungsschritt S6' die Bildsegmente auch darauf geprüft werden, ob das aus dem linken Bildsegment 12 extrahierte Bildsegment und das aus dem rechten Teilbereich 14 extrahierte Bildsegment gleich groß sind und auf der gleichen Höhe liegen. Dabei können natürlich wieder alle extrahierten Bildsegmente aus den Teilbereichen 12 und 14 in beschriebener Weise untersucht und ggf. paarweise verglichen werden.

## Patentansprüche

1. Verfahren zum Erkennen eines Zustands einer rückwärtigen Fahrzeugbeleuchtung, bei dem ein in einem Fahrzeug (1) integriertes Kamerasystem ein Bild einer Umgebung vor dem Fahrzeug (1) erzeugt und
eine mit dem Kamerasystem verbundene Auswerteeinheit (8) mindestens ein in dem Bild enthaltenes Fahrzeug (10) erkennt,
einen diesem Fahrzeug (10) zugehörigen Bildbereich (11) des Bildes definiert und
den Bildbereich (11) in Teilbereiche (12, 13, 14) einteilt, die zumindest einen linken Teilbereich (12) und einen rechten Teilbereich (14) umfassen,
wobei mittels der Auswerteeinheit (8) jeweils eine Segmentierung der Teilbereiche (12, 13, 14) in Bildsegmente durchgeführt wird anhand von Helligkeitswerten in diesen Teilbereichen (12, 13, 14) enthaltener Bildpunkte, indem in jedem dieser Teilbereiche (12, 13, 14) Zeilen von in diesen Teilbereichen (12, 13, 14) enthaltenen Bildpunkten definiert und die Zeilen anhand von Helligkeitswerten dieser Bildpunkte in Zeilensegmente zumindest weitgehend gleicher Helligkeitswerte zerlegt werden, wobei die Bildsegmente durch Zusammenfassen von einander berührenden Zeilensegmenten benachbarter Zeilen erzeugt werden, wobei ferner aus jedem dieser Teilbereiche (12, 13, 14) jeweils mindestens ein hellstes Bildsegment extrahiert wird und
eine Prüfung der extrahierten Bildsegmente darauf durchgeführt wird, ob sie einer rückwärtigen Fahrzeugbeleuchtung in eingeschaltetem Zustand zuordenbar sind,
wobei die Auswerteeinheit (8) ein dem so festgestellten Zustand zugeordnetes Signal ausgibt, falls diese Prüfung positiv ausgefallen ist, wobei das Verfahren einen eingeschalteten Fahrtrichtungsanzeiger und/oder eine eingeschaltete Warnblinkanlage zu erkennen erlaubt, wobei für die Prüfung der extrahierten Bildsegmente ein zeitlicher Verlauf der Helligkeitswerte in den aus dem linken Teilbereich (12) und dem rechten Teilbereich (14) extrahierten Bildsegmenten detektiert und auf zeitliche Periodizität untersucht wird, wobei das Signal ausgegeben wird, wenn dabei eine Periodizität mit einer Frequenz innerhalb eines vorgegebenen Frequenzbereichs festgestellt wird.

2. Verfahren nach Anspruch 1, **dadurch gekennzeichnet, dass** ein Bildsegment nur dann als hellstes oder eines der hellsten Bildsegmente extrahiert wird, wenn Helligkeitswerte von Bildpunkten dieses Bildsegments einen Schwellwert übersteigen.

3. Verfahren nach einem der Ansprüche 1 und 2, **dadurch gekennzeichnet, dass** es ein Aufleuchten eines Bremslichtsystems zu erkennen erlaubt, wobei der Bildbereich (11) durch die Auswerteeinheit (8) in den linken Teilbereich (12), den rechten Teilbereich (14) und einen mittleren Teilbereich (13) eingeteilt wird und wobei die aus den Teilbereichen (12, 13, 14) extrahierten Bildsegmente bei der genannten Prüfung jeweils darauf geprüft werden, ob das extrahierte Bildsegment aus dem linken Teilbereich (12) und das extrahierte Bildsegment aus dem rechten Teilbereich (14) von gleicher Größe sind und auf einer gleichen Höhe liegen und ob das hellstes Bildsegment aus dem mittleren Teilbereich (13) sich höher und mittig zwischen den hellsten Bildsegmenten aus dem linken und dem rechten Teilbereich (12, 14) befindet, wobei das Signal als Bremslichtsignal ausgegeben wird, wenn diese Prüfung positiv ausfällt.

4. Verfahren nach Anspruch 3, **dadurch gekennzeichnet, dass** im mittleren Teilsegment (13) genau ein hellstes Bildsegment und im linken und im rechten Teilbereich (12, 14) jeweils ein oder zwei oder drei hellste Bildsegmente extrahiert werden.

5. Verfahren nach einem der Ansprüche 1 bis 4, **dadurch gekennzeichnet, dass** der vorgegebene Frequenzbereich definiert ist als dem Intervall von 1 Hz bis 2 Hz entsprechender oder dieses Intervall enthaltender Bereich.

6. Verfahren nach einem der Ansprüche 1 bis 5, **dadurch gekennzeichnet, dass** bei der Prüfung der Bildsegmente im Fall der Feststellung einer Periodizität der Helligkeitswerte innerhalb des vorgegebenen Frequenzbereichs ferner geprüft wird, ob die Periodizität für das extrahierte Bildsegment aus dem linken Teilbereich (12) und das extrahierte Bildsegment aus dem rechten Teilbereich (14) gleich und synchron ist, wobei das Signal als auf eine eingeschaltete Warnblinkanlage hindeutendes Signal ausgegeben wird, wenn diese Prüfung positiv ausfällt.

7. Verfahren nach Anspruch 6, **dadurch gekennzeichnet, dass** bei der Prüfung ferner geprüft wird, ob das extrahierte Bildsegment aus dem linken Teilbereich (12) und das extrahierte Bildsegment aus dem rechten Teilbereich (14) von gleicher Größe sind und auf einer gleichen Höhe liegen.

8. Vorrichtung zum Erkennen eines Zustands einer rückwärtigen Fahrzeugbeleuchtung zur Verwendung in einem Fahrzeug (1), wobei die Vorrichtung ein Kamerasystem zum Erfassen von Bildern einer Umgebung vor dem Fahrzeug (1) und eine Auswerteeinheit (8) aufweist und wobei die Auswerteeinheit (8) eingerichtet ist
- zum Erkennen mindestens eines in den Bildern enthaltenen Fahrzeugs (10),
- zum Definieren eines zu diesem Fahrzeug (10) gehörigen Bildbereichs (11) sowie
- zum Einteilen dieses Bildbereichs (11) in Teilbereiche (12, 13, 14), die zumindest einen linken Teilbereich (12) und einen rechten Teilbereich (14) umfassen,
- zum Durchführen einer Segmentierung der Teilbereiche (12, 13, 14) in Bildsegmente anhand von Helligkeitswerten in diesen Teilbereichen (12, 13, 14) enthaltener Bildpunkte, indem in jedem dieser Teilbereiche (12, 13, 14) Zeilen von in diesen Teilbereichen (12, 13, 14) enthaltenen Bildpunkten definiert und die Zeilen anhand von Helligkeitswerten dieser Bildpunkte in Zeilensegmente zumindest weitgehend gleicher Helligkeitswerte zerlegt werden, wobei die Bildsegmente durch Zusammenfassen von einander berührenden Zeilensegmenten benachbarter Zeilen erzeugt werden,
- zum Extrahieren jeweils mindestens eines hellsten Bildsegments aus jedem dieser Teilbereiche (12, 13, 14),
- zum Durchführen einer Prüfung der extrahierten Bildsegmente darauf, ob sie einer rückwärtigen Fahrzeugbeleuchtung in eingeschaltetem Zustand zuordenbar sind, und
- zum Erzeugen eines dem so festgestellten Zustand zugeordneten Signals, falls diese Prüfung positiv ausfällt, wobei die Vorrichtung zum Erkennen eines eingeschalteten Fahrtrichtungsanzeigers und/oder einer eingeschalteten Warnblinkanlage geeignet ist, wobei die Auswerteeinheit (8) eingerichtet ist, bei der Prüfung der extrahierten Bildsegmente einen zeitlichen Verlauf der Helligkeitswerte in den aus dem linken Teilbereich (12) und dem rechten Teilbereich (14) extrahierten Bildsegmenten zu detektieren und auf zeitliche Periodizität zu untersuchen und das Signal auszugeben, wenn dabei eine Periodizität mit einer Frequenz innerhalb eines vorgegebenen Frequenzbereichs festgestellt wird.

9. Vorrichtung nach Anspruch 8, **dadurch gekennzeichnet, dass** es zum Erkennen eines Aufleuchtens eines Bremslichtsystems geeignet ist, wobei die Auswerteeinheit (8) zum Einteilen des Bildbereichs (11) in den linken Teilbereich (12), einen mittleren Teilbereich (13) und den rechten Teilbereich (14) eingerichtet ist und ferner eingerichtet ist, bei der Prüfung zu prüfen, ob das extrahierte Bildsegment aus dem linken Teilbereich (12) und das extrahierte Bildsegment aus dem rechten Teilbereich (14) von gleicher Größe sind und auf einer gleichen Höhe liegen und ob das hellste Bildsegment aus dem mittleren Teilbereich (13) sich höher und mittig zwischen den hellsten Bildsegmenten aus dem linken und dem rechten Teilbereich (12, 14) befindet.

10. Vorrichtung nach einem der Ansprüche 8 oder 9, **dadurch gekennzeichnet, dass** die Auswerteeinheit (8) eingerichtet ist, bei der Prüfung der Bildsegmente im Fall der Feststellung einer Periodizität der Helligkeitswerte innerhalb des vorgegebenen Frequenzbereichs ferner zu prüfen, ob die Periodizität für das extrahierte Bildsegment aus dem linken Teilbereich (12) und das extrahierte Bildsegment aus dem rechten Teilbereich (14) gleich und synchron ist, und das Signal als auf eine eingeschaltete Warnblinkanlage hindeutendes Signal auszugeben, wenn diese Prüfung positiv ausfällt.

11. Vorrichtung nach Anspruch 8 bis 10, **dadurch gekennzeichnet, dass** das Kamerasystem als Graustufenkamera (2) ausgestaltet ist oder eine Graustufenkamera (2) umfasst zum Erzeugen von Grauwertbildern.

12. Vorrichtung nach einem der Ansprüche 8 bis 11, **dadurch gekennzeichnet, dass** die Auswerteeinheit (8) programmtechnisch eingerichtet ist zur Durchführung eines Verfahrens nach einem der Ansprüche 1 bis 7.

## Claims

1. A method for detecting a state of a rear vehicle light, in which a camera system integrated into a vehicle (1) generates an image of a surrounding area in front of the vehicle (1), and
an evaluation unit (8) connected to the camera system detects at least one vehicle (10) present in the image,
defines an image region (11) of the image associated with this vehicle (10) and divides the image region (11) into sub-regions (12, 13, 14) that include at least one left sub-region (12) and one right sub-region (14),
wherein a respective segmentation of the sub-regions (12, 13, 14) into image segments is carried out by means of the evaluation unit (8), based on brightness values of pixels present in these sub-regions (12, 13, 14), by defining, in each of these sub-regions (12, 13, 14), rows of pixels present in these sub-regions (12, 13, 14) and breaking down the rows, based on brightness values of these pixels, into row segments of at least substantially identical brightness values, wherein the image segments are generated by combining row segments of adjoining rows which are in contact with one another,
wherein furthermore at least one brightest image segment is extracted from each of these sub-regions (12, 13, 14), and
a check of the extracted image segments is carried out as to whether these can be associated with a rear vehicle light in a switched-on state,
wherein the evaluation unit (8) emits a signal associated with the state thus established if this check was positive, wherein the method allows detecting a switched-on turn signal and/or a switched-on hazard warning light, wherein a chronological progression of the brightness values in the image segments extracted from the left sub-region (12) and the right sub-region (14) is detected for the check of the extracted image segments and is examined for temporal periodicity, wherein the signal is emitted when a periodicity having a frequency within a predefined frequency range is established.

2. The method according to claim 1, **characterized in that** an image segment is only extracted as the brightest or one of the brightest image segments when brightness values of pixels of this image segment exceed a threshold value.

3. The method according to any one of claims 1 and 2, **characterized by** allowing detecting an illumination of a brake light system, wherein the image region (11) is divided by the evaluation unit (8) into the left sub-region (12), the right sub-region (14) and a center sub-region (13), and wherein each of the image segments extracted from the sub-regions (12, 13, 14) are checked during the aforementioned check as to whether the extracted image segment from the left sub-region (12) and the extracted image segment from the right sub-region (14) have the same size and are located at the same height, and whether the brightest image segment from the center sub-region (13) is located higher and centrally between the brightest image segments from the left and right sub-regions (12, 14), wherein the signal is emitted as a brake light signal when this check is positive.

4. The method according to claim 3, **characterized in that** exactly one brightest image segment is extracted in the center sub-segment (13) and one or two or three brightest image segments are each extracted in the left and right sub-regions (12, 14).

5. The method according to any one of claims 1 to 4, **characterized in that** the predefined frequency range is defined as a range corresponding to the interval from 1 Hz to 2 Hz or including this interval.

6. The method according to any one of claims 1 to 5, **characterized in that**, during the check of the image segments, if a periodicity of the brightness values within the predefined frequency range is detected, it is further checked whether the periodicity for the extracted image segment from the left sub-region (12) and for the extracted image segment from the right sub-region (14) is identical and synchronous, wherein the signal is emitted as a signal indicating a switched-on hazard warning light when this check is positive.

7. The method according to claim 6, **characterized in that** it is further checked during the check whether the extracted image segment from the left sub-region (12) and the extracted image segment from the right sub-region (14) have the same size and are located at the same height.

8. A device for detecting a state of a rear vehicle light for use in a vehicle (1), the device comprising a camera system for recording images of a surrounding area in front of the vehicle (1) and an evaluation unit (8), and wherein the evaluation unit (8) is configured for
detecting at least one vehicle (10) present in the images,
defining an image region (11) associated with this vehicle (10) and
dividing this image region (11) into sub-regions (12, 13, 14), which include at least one left sub-region (12) and one right sub-region (14),
carrying out a segmentation of the sub-regions (12, 13, 14) into image segments, based on brightness values of pixels present in these sub-regions (12, 13, 14), by defining, in each of these sub-regions (12, 13, 14), rows of pixels present in these sub-regions (12, 13, 14) and breaking down the rows, based on brightness values of these pixels. into row segments of at least substantially identical brightness values, wherein the image segments are generated by combining row segments of adjoining rows which are in contact with one another,
extracting at least one brightest image segment from each of these sub-regions (12, 13, 14),
carrying out a check of the extracted image segments as to whether these can be associated with a rear vehicle light in a switched-on state, and
generating a signal associated with the state thus established if this check is positive, wherein the device is suitable for detecting a switched-on turn signal and/or a switched-on hazard warning light, wherein the evaluation unit (8) is configured to detect, during the check of the extracted image segments, a chronological progression of the brightness values in the image segments extracted from the left sub-region (12) and the right sub-region (14) and to examine these for temporal periodicity, and to emit the signal when a periodicity having a frequency within a predefined frequency range is established.

9. The device according to claim 8, **characterized in that** it is suitable for detecting an illumination of a brake light system, wherein the evaluation unit (8) is configured for dividing the image region (11) into the left sub-region (12), a center sub-region (13) and the right sub-region (14), and is further configured to check, during the check, whether the extracted image segment from the left sub-region (12) and the extracted image segment from the right sub-region (14) have the same size and are located at the same height, and whether the brightest image segment from the center sub-region (13) is located higher and centrally between the brightest image segments from the left and right sub-regions (12, 14).

10. The device according to claim 8 or 9, **characterized in that** the evaluation unit (8) is configured, during the check of the image segments, to check, if a periodicity of the brightness values within the predefined frequency range is established, whether the periodicity for the extracted image segment from the left sub-region (12) and for the extracted image segment from the right sub-region (14) is identical and synchronous, and to emit the signal as a signal indicating a switched-on hazard warning light when this check is positive.

11. The device according to claims 8 to 10, **characterized in that** the camera system is designed as a grayscale camera (2) or comprises a grayscale camera (2) for generating grayscale images.

12. The device according to any one of claims 8 to 11, **characterized in that** the evaluation unit (8) is configured, from a programming point of view, to carry out a method according to any one of claims 1 to 7.

## Revendications

1. Méthode pour détecter un état d'un éclairage automobile arrière, pour lequel
un système de caméra intégré dans un véhicule (1) génère une image d'un environnement devant le véhicule (1) et
une unité d'évaluation (8) reliée au système de caméra détecte au moins un véhicule (10) incrusté dans l'image,
définit une zone d'image (11) de l'image associée à ce véhicule (10) et
divise la zone d'image (11) en des secteurs partiels (12, 13, 14) comprenant au moins un secteur partiel gauche (12) et un secteur partiel droite (14),
une segmentation respective des secteurs partiels (12, 13, 14) en segments d'image étant effectuée au moyen de l'unité d'évaluation (8) sur la base de valeurs de luminosité des pixels contenus dans ces secteurs partiels (12, 13, 14) en définissant dans chacun des secteurs partiels (12, 13, 14) des lignes de pixels contenus dans ces secteurs partiels (12, 13, 14) et en morcelant, sur la base de valeurs de luminosité de ces pixels, les lignes en segments de lignes ayant des valeurs de luminosité au moins sensiblement égales, les segments d'image étant générés en regroupant des segments de lignes adjacentes qui se touchent,
au moins un segment d'image le plus clair respectif étant extrait en outre de chacun de ces secteurs partiels (12, 13, 14), et
un contrôle des segments d'image extraits étant effectué afin de déterminer s'ils peuvent être associés à un éclairage automobile arrière en état allumé,
l'unité d'évaluation (8) émettant un signal associé à l'état ainsi déterminé si ce test a été positif, la méthode permettant de détecter un indicateur de direction allumé et/ou un système de feux de détresse allumé, une évolution dans le temps des valeurs de luminosité dans les segments d'image extraits du secteur partiel gauche (12) et du secteur partiel droite (14) étant détectée pour le test des segments d'image extraits, et la périodicité temporelle étant examinée, le signal étant émis si une périodicité ayant une fréquence dans une plage de fréquence prédéterminée est relevée.

2. Méthode selon la revendication 1, **caractérisée en ce qu'**un segment d'image n'est extrait comme le plus lumineux ou un des segments d'image les plus lumineux que si les valeurs de luminosité des pixels de ce segment d'image dépassent une valeur de seuil.

3. Méthode selon l'une quelconque des revendications 1 et 2, **caractérisée en ce qu'**elle permet de détecter un allumage d'un système de feux de stop, la zone d'image (11) étant divisée par l'unité d'évaluation (8) en un secteur partiel gauche (12), un secteur partiel droite (14) et un secteur partiel médian (13), et les segments d'image extraits des secteurs partiels (12, 13, 14) étant examinés lors du test pour définir si le segment d'image extrait du secteur partiel gauche (12) et le segment d'image extrait du secteur partiel droite (14) sont de la même taille et du même niveau et si le segment d'image le plus clair du secteur partiel médian (13) est situé plus haut et au centre entre les segments d'image les plus clairs des segments d'image du secteur partiel gauche et du secteur partiel droite (12, 14), le signal étant émis comme signal de feu de stop si ce test est positif.

4. Méthode selon la revendication 3, **caractérisée en ce que** précisément un segment d'image le plus clair est extrait du secteur partiel médian (13) et qu'un ou deux ou trois segments d'image les plus clairs de chacun des secteurs partiels gauche et droite (12, 14) sont extraits.

5. Méthode selon l'une quelconque des revendications 1 à 4, **caractérisée en ce que** la plage de fréquences prédéterminée est définie comme correspondant à l'intervalle de 1 Hz à 2 Hz ou comme une plage comprenant cet intervalle.

6. Méthode selon l'une quelconque des revendications 1 à 5, **caractérisée en ce que** lors du test des segments d'image, si une périodicité des valeurs de luminosité dans la plage de fréquence prédéterminée est détectée, il est testé en outre si la périodicité pour le segment d'image extrait du secteur partiel de gauche (12) et le segment d'image extrait du secteur partiel de droite (14) sont identiques et synchrones, le signal étant émis en tant que signal indiquant un système de feux de détresse allumé si ce test est positif.

7. Méthode selon la revendication 6, **caractérisée en ce qu'**il est vérifié en outre lors du test si le segment d'image extrait du secteur partiel gauche (12) et le segment d'image extrait du secteur partiel droite (14) sont de la même taille et situés au même niveau.

8. Dispositif pour détecter un état d'un éclairage automobile arrière pour mise en œuvre dans un véhicule (1), le dispositif présentant un système de caméra pour la prise d'images d'un environnement devant le véhicule (1) et une unité d'évaluation (8), l'unité d'évaluation (8) étant configurée
pour reconnaître au moins un véhicule (10) incrusté dans les images,
pour définir une zone d'image (11) appartenant à ce véhicule (10), ainsi que
pour diviser cette zone d'image (11) en des secteurs partiels (12, 13, 14) comprenant au moins un secteur partiel gauche (12) et un secteur partiel droite (14),
pour réaliser une segmentation des secteurs partiels (12, 13, 14) en des segments d'image sur la base de valeurs de luminosité des pixels contenus dans ces secteurs partiels (12, 13, 14), en définissant dans chacun de ces secteurs partiels (12, 13, 14) des lignes de pixels contenus dans ces secteurs partiels (12, 13, 14) et en divisant les lignes en segments de lignes de valeurs de luminosité au moins sensiblement égales sur la base de valeurs de luminosité de ces pixels, les segments d'image étant générés en regroupant des segments de lignes adjacentes qui se touchent,
pour extraire au moins un segment d'image le plus clair respectif de chacun de ces secteurs partiels (12, 13, 14),
pour effectuer un test des segments d'image extraits afin de déterminer s'ils peuvent être associés à un éclairage automobile arrière en état allumé, et
pour générer un signal associé à l'état ainsi détecté si ce test est positif, le dispositif permettant de détecter un indicateur de direction allumé et/ou un système de feux de détresse allumé, l'unité d'évaluation (8) permettant de détecter une évolution dans le temps des valeurs de luminosité dans les segments d'image extraits du secteur partiel gauche (12) et du secteur partiel droite (14), et d'examiner la périodicité temporelle, le signal étant émis si une périodicité ayant une fréquence dans une plage de fréquence prédéterminée est relevée.

9. Dispositif selon la revendication 8, **caractérisé en ce qu'**il permet de détecter un allumage d'un système de feux de stop, l'unité d'évaluation (8) étant configurée pour diviser la zone d'image (11) en un secteur partiel gauche (12), un secteur partiel médian (13) et un secteur partiel droite (14) et étant en outre configurée pour vérifier lors du test si le segment d'image extrait du secteur partiel gauche (12) et le segment d'image extrait du secteur partiel droite (14) sont de la même taille et situés au même niveau, et si le segment d'image le plus clair du secteur partiel médian (13) est situé plus haut et au centre entre les segments d'image les plus clairs des secteurs partiels gauche et droite (12, 14).

10. Dispositif selon l'une quelconque des revendications 8 ou 9, **caractérisé en ce que** l'unité d'évaluation (8) est configurée pour vérifier en outre lors du test, au cas où une périodicité des valeurs de luminosité dans la plage de fréquence prédéterminée est détectée, si la périodicité pour le segment d'image extrait du secteur partiel gauche (12) et pour le segment d'image extrait du secteur partiel droite (14) sont identiques et synchrones, et pour émettre le signal comme signal indiquant qu'un système de feux de détresse est allumé, lorsque le test est positif.

11. Dispositif selon l'une quelconque des revendications 8 à 10, **caractérisé en ce que** le système de caméra est conçu comme une caméra à niveaux de gris (2) ou comprend une caméra à niveaux de gris (2) pour générer des images à niveaux de gris.

12. Dispositif selon l'une quelconque des revendications 8 à 11, **caractérisé en ce que** l'unité d'évaluation (8) est conçue en termes de technologie de programme pour la mise en œuvre d'une méthode selon l'une quelconque des revendications 1 à 7.
